# DEMANDE DE BREVET EUROPEEN

(11) **EP 1 547 858 A1**
(43) Date de publication de la demande: **29.06.2005**
(21) Numéro de dépôt: 04300894.5
(22) Date de dépôt: 15.12.2004
(51) Int. Cl.: B60N 2/46

(54) **Accoudoir pour siège de véhicule automobile, console et siège portant cet accoudoir**

(30) Priorité: 22.12.2003 FR 0315159
(71) Demandeur: Renault s.a.s., 92100 Boulogne Billancourt (FR)
(72) Inventeur: Legrand, Jean-Pierre, 28300 Bercheres Saint Germain (FR)

(57) **Abrégé**

L'invention concerne un accoudoir (5) pour siège de véhicule automobile, caractérisé en ce qu'il est apte à pivoter, par rapport au support sur lequel il est monté, autour d'un axe sensiblement vertical (55), ou d'un axe sensiblement horizontal s'étendant parallèlement à la direction longitudinale du siège, entre une position normale d'utilisation, à proximité du siège, et au moins une position écartée, à distance du siège.

## Description

L'invention concerne un accoudoir pour siège de véhicule automobile, ainsi qu'une console et un siège portant un tel accoudoir.

Les sièges de véhicules automobiles sont pourvus de fixations de ceinture de sécurité fixées sur les bords latéraux de leur assise. En général, les accoudoirs de siège sont placés à proximité de ces bords latéraux, sensiblement au-dessus des fixations de ceinture. La présence d'un accoudoir peut alors gêner un passager assis qui souhaite accéder à la fixation de ceinture placée sous cet accoudoir.

Un siège comprend une assise et un dossier relié au bord arrière de l'assise. Dans la suite, on définit par direction longitudinale du siège, la direction joignant le bord arrière de l'assise et son bord avant opposé, la direction transversale étant perpendiculaire à cette direction longitudinale dans un plan horizontal. Lorsque le siège est disposé dans le véhicule de manière telle que le passager regarde vers l'avant du véhicule, les directions longitudinale et transversale du siège sont donc confondues avec celles du véhicule.

Les accoudoirs de siège de véhicule automobile sont en général fixés sur le dossier du siège et articulés autour d'un axe horizontal transversal au siège. Le plus souvent leur pivotement peut être réglé au moyen d'une molette afin de régler la hauteur de l'accoudoir. Il peut alors s'avérer fastidieux de tourner la molette suffisamment pour relever complètement l'accoudoir et accéder à la fixation de ceinture, ceci, à chaque fois qu'il est nécessaire d'attacher ou de détacher sa ceinture.

Le document FR-2 816 898 décrit un siège de véhicule comportant un accoudoir articulé de manière à pivoter dans un plan horizontal. Toutefois, l'accoudoir pivote vers le siège afin de retenir des objets contre le dossier de celui-ci. Il ne peut donc être pivoté lorsque le passager est assis pour dégager l'accès à la fixation de ceinture de sécurité.

L'invention vise à pallier ces inconvénients en proposant un accoudoir pouvant être facilement écarté du siège afin de permettre de dégager l'accès à une fixation de ceinture de sécurité, ou à un autre élément du siège. Une telle disposition est également avantageuse lorsque le passager assis doit se pencher vers l'arriêre du véhicule, l'accoudoir s'écartant alors du siège laissant plus de liberté au passager dans ses mouvements.

A cet effet, l'objet de l'invention concerne un accoudoir pour siège de véhicule automobile, caractérise en ce qu'il est apte à pivoter, par rapport au support sur lequel il est monté, autour d'un axe sensiblement vertical, ou d'un axe sensiblement horizontal s'étendant parallèlement à la direction longitudinale du siège, entre une position normale d'utilisation, à proximité du siège, et au moins une position écartée, à distance du siège.

De préférence, l'accoudoir est apte à pivoter de manière élastique, une force de rappel s'exerçant sur l'accoudoir pour le ramener d'une position écartée à la position normale. Ainsi, une poussée exercée par le bras du passager qui cherche à atteindre la fixation de ceinture repousse l'accoudoir vers l'extérieur du siège, facilitant l'accés à la fixation, l'accoudoir revenant à sa position initiale dès que le passager a retiré son bras.

Dans un mode de réalisation, l'axe de pivotement est formé par une articulation au moyen de laquelle l'accoudoir est relié à son support, cette articulation étant élastique, ou pourvue d'un moyen élastique de rappel. L'articulation ou le moyen de rappel exerce alors une force de rappel pour ramener l'accoudoir d'une position écartée à la position normale.

Dans un autre mode de réalisation, l'axe de pivotement est formé d'une partie de l'accoudoir dont la forme et/ou le matériau sont choisis pour que cette partie présente un comportement plus élastique que le reste de l'accoudoir. Ainsi, sous l'action d'une pression du passager, l'accoudoir va se déformer puis retrouver sa forme initiale dès que la pression cessera. Cette réalisation présente l'avantage de ne pas nécessiter une articulation ou des moyens de rappel spécifiques pour exercer la force de rappel, ce qui permet de diminuer le nombre de pièces à assembler,

Ces modes de réalisation n'excluent, pas la possibilité d'articuler l'accoudoir à son support, pour permettre un réglage en hauteur, par exemple par rotation autour d'un axe horizontal transversal au siège.

De préférence, lorsque l'axe de pivotement est sensiblement vertical, l'accoudoir est formé d'un bras d'appui allongé dont une extrémité est: libre et l'autre extrémité est reliée au support, ledit bras s'étendant suivant une direction sensiblement parallèle à la direction longitudinale du siège dans sa position normale d'utilisation.

De préférence, lorsque l'axe de pivotement est sensiblement horizontal et s'étend parallèlement à la direction longitudinale du siège, l'accoudoir est formé d'un bras d'appui allongé supporté par au moins un pied, l'extrémité du pied étant reliée au support, le bras s'étendant suivant une direction sensiblement parallèle à la direction longitudinale du siège.

Selon les variantes, le support, de l'accoudoir est un siège ou une console de véhicule automobile.

De préférence, l'accoudoir est pourvu de moyens d'absorption d'énergie cinétique.

L'invention concerne par ailleurs une console de véhicule automobile destinée à être placée à proximité d'un siège pourvu d'une fixation de ceinture de sécurité, la console supportant au moins un accoudoir selon l'invention de sorte que, dans la écartée, l'accoudoir libère l'accès à la fixation de ceinture de sécurité.

L'invention concerne également un siège de véhicule automobile, comportant une assise pourvue d'une fixation de ceinture de sécurité et un dossier, l'un au moins des bords verticaux du dossier ou l'un au moins des bords longitudinaux de l'assise supportant un accoudoir selon l'invention, de sorte que, dans la position écartée, l'accoudoir libère l'accès à la fixation de ceinture de sécurité.

L'invention est maintenant décrite en référence aux dessins annexés, non limitatifs, dans lesquels :
- la figure 1 représente une vue partielle en perspective de l'habitacle d'un véhicule comportant une console pourvue d'accoudoirs selon un premier mode de réalisation de l'invention ;
- la figure 2 représente une vue de face des éléments de la figure 1, l'un des accoudoirs étant dans une position écartée ;
- la figure 3 représente une vue partielle en perspective de l'habitacle d'un véhicule comportant des sièges pourvus d'accoudoirs selon un deuxième mode de réalisation de l'invention ;
- la figure 4 représente une vue de face des éléments de la figure 3, l'un des accoudoirs étant dans une position écartée.

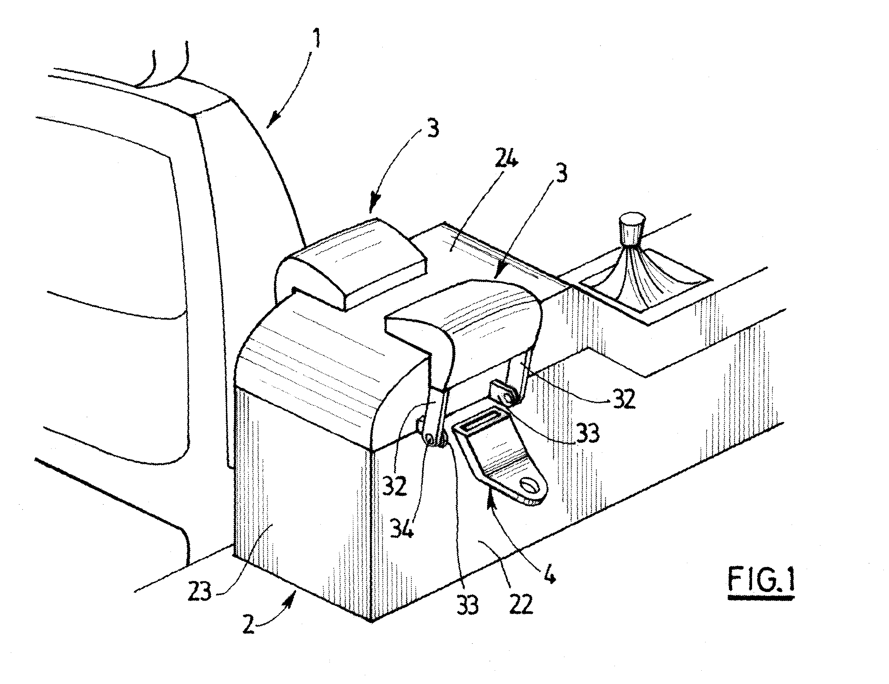

La figure 1 représente un habitacle de véhicule comportant : un siège avant 1, une console centrale 2 placée entre les deux sièges avant du véhicule, et deux accoudoirs 3. Une des fixations de ceinture de sécurité 4 est également représentée à proximité de la console, elle est fixée sur le siège avant adjacent, non représenté pour plus de clarté.

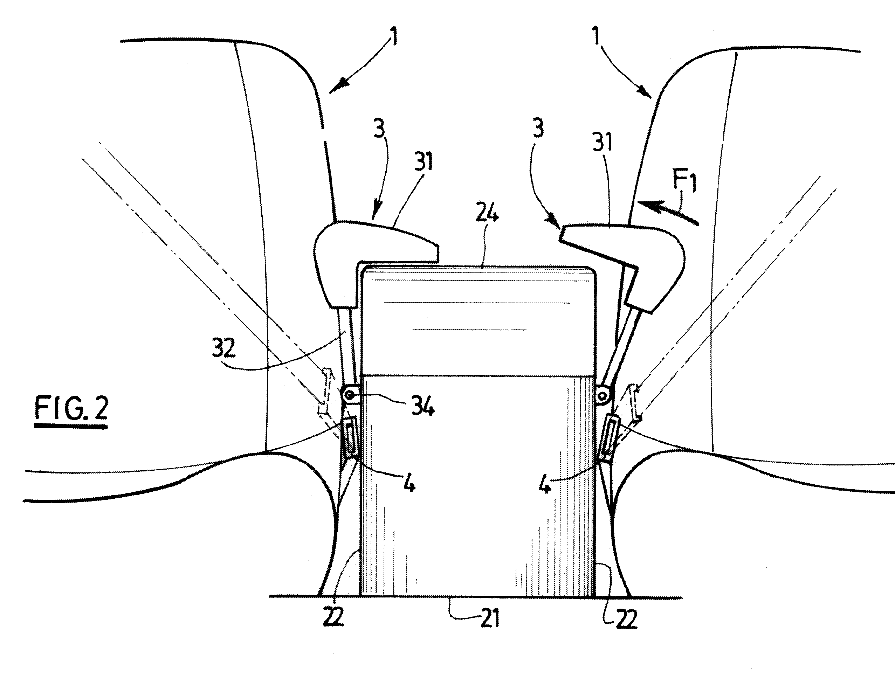

Les deux sièges 1, la console 2, les deux accoudoirs 3 et deux fixations de ceinture de sécurité 4 sont représentés sur la figure 2.

La console 2, de forme générale sensiblement parallélépipédique, est formée d'une paroi de fond 21, solidaire de deux parois latérales longitudinales 22 et de deux parois latérales transversales 23. Les parois latérales supportent une paroi supérieure 24. On considère que les directions longitudinale et transversale de la console sont confondues avec celles du siège ou du véhicule.

Les accoudoirs 3 sont montés sur la console de part et d'autre de celle-ci pour chacun des sièges et sont symétriques par rapport à un plan vertical longitudinal médian de la console. Un seul des accoudoirs est donc décrit ci-après.

L'accoudoir 3 comprend un bras d'appui 31 de forme allongée s'étendant parallèlement à la direction longitudinale de la console. Ce bras 31 est supporté par deux pieds 32 sensiblement identiques, parallèles entre eux et perpendiculaires à la direction longitudinale du bras d'appui. Les extrémités libres des pieds sont montées articulées sur des supports 33 solidaires de Lune des parois latérales longitudinales 22 de la console 2. Les pieds 32 pivotent autour d'un même axe de rotation 34 passant par les supports 33. Cet axe est sensiblement horizontal et parallèle à la direction longitudinale de la console.

La partie droite de la figure 2 représente un accoudoir dans la position d'utilisation. Dans cette position, le bras d'appui 31 s'étend dans un plan sensiblement horizontal, à proximité immédiate du siège et sensiblement au-dessus d'un bord latéral de celui-ci et de la fixation. de ceinture 4, gênant l'accès à celle-ci. Les pieds 32 et le bras d'appui 31 doivent, cette position, être suffisamment distants de la console pour pouvoir s'en rapprocher et faciliter ainsi l'accès à la fixation de ceinture. II suffit par exemple de prévoir que les pieds 32 forment chacun un angle inférieur à 90° avec la direction transversale du bras d'appui. Un espace formé entre l'accoudoir et la console permet le pivotement de l'accoudoir en direction de la console suivant la flèche F1 afin de dégager l'accès à la fixation 4. L'accoudoir est alors dans une position écartée du siège, tel que représenté sur la partie gauche de la figure 2.

Un ressort, non représenté, est monté sur le(s) support(s) 33, de manière à exercer une force de rappel sur l'accoudoir lorsqu'il est en position écartée pour le ramener à la position normale d'utilisation par rotation autour de l'axe 34. Le passage de la position normale à une position écartée nécessite alors l'exercice d'une pression sur l'accoudoir en direction de la console.

Les supports 33, ou les pieds 32, comportent de préférence des butées (non représentées) ou moyens de blocage pour empêcher le pivotement de l'accoudoir en direction du siège depuis la position normale d'utilisation.

Bien entendu, d'autres formes de l'accoudoir peuvent être réalisées, pourvu qu'il soit possible de le faire pivoter en direction de la console. Notamment, les deux pieds peuvent être remplacés par un pied unique.

Dans une variante non représentée, on peut prévoir un axe de pivotement 34 qui s'étend sur toute la longueur de la paroi longitudinale 22 de la console, de sorte qu'il est possible de faire coulisser l'accoudoir 3 le long de la console en fonction de la position du siège adjacent.

Dans une autre variante, le rappel élastique de l'accoudoir peut être obtenu en utilisant un matériau et une forme appropriés de l'accoudoir. Par exemple, les pieds de l'accoudoir peuvent être formés de lames métalliques disposées de manière à présenter un comportement élastique transversalement. Une poussée latérale vers la console provoque ainsi une flexion des lames vers la console qui s'apparente à un pivotement autour d'un axe horizontal longitudinal. Il est alors préférable de réaliser les pieds de manière à ce que leur comportement dans les autres directions de l'espace soit rigide pour une utilisation normale de l'accoudoir.

Ces différentes variantes peuvent être adaptées à des accoudoirs fixés non plus sur une console, mais sur les bords longitudinaux de l'assise d'un siège.

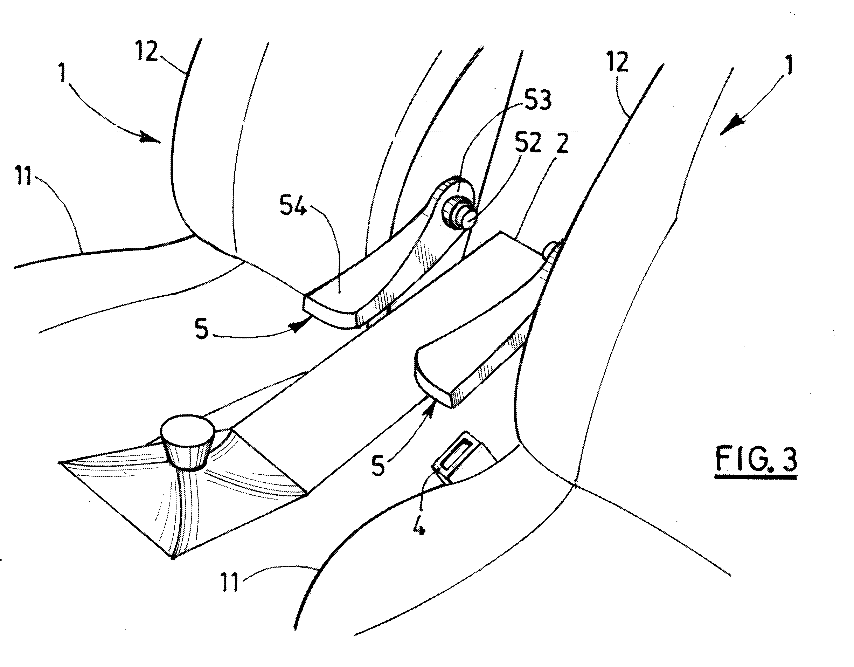

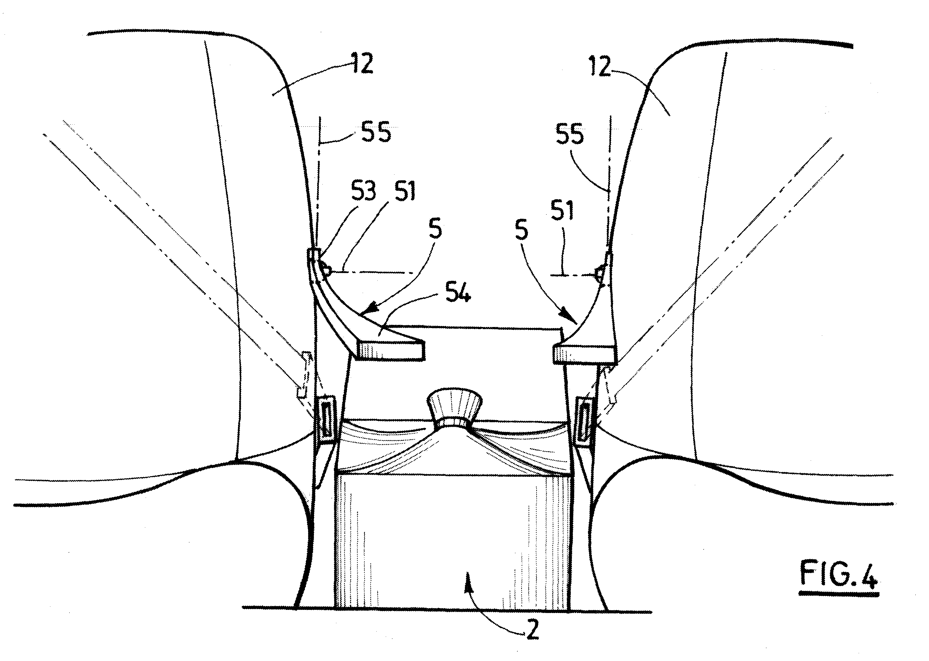

Un autre mode de réalisation de l'invention est décrit en référence aux figures 3 et 4. Sur ces figures, les éléments identiques à ceux déjà décrits sont désignés par les mêmes références.

La figure 3 représente un habitacle de véhicule comportant deux sièges avant 1 et une console centrale 2 placée entre les deux sièges avant. Chaque siège comprend une assise 11, pourvue d'une fixation de ceinture 4, et un dossier 12 équipé d'un accoudoir 5. Chaque accoudoir 5 est fixé sur un bord latéral sensiblement vertical du dossier. Les accoudoirs sont sensiblement identiques, un seul sera donc décrit.

L'accoudoir 5 est monté sur le dossier 12 au moyen d'une articulation (non visible) lui permettant de pivoter par rapport à un axe 51 horizontal et transversal du siège. Ce mouvement de rotation est réglable au moyen d'une molette de réglage 52.

L'accoudoir 5 forme un bras d'appui de forme générale allongée qui s'étend suivant la direction longitudinale du siège, et dans un plan sensiblement horizontal, dans sa position normale d'utilisation. L'une des extrémités 53 du bras d'appui est montée à rotation autour de l'axe 51. Cette extrémité 53 présente une forme de lame mince dont le plan est sensiblement perpendiculaire à l'axe de rotation 51. L'autre extrémité 54 de l'accoudoir présente une surface supérieure d'appui plane, qui s'étend dans un plan sensiblement horizontal et perpendiculaire au plan formé par l'extrémité 53.

L'articulation utilisée (non représentée sur les figures) est une aruculation élastique, par exemple de type rotule, qui permet une faible rotation de l'accoudoir autour d'un axe sensiblement vertical 55, en procurant un effet élastique de rappel de l'accoudoir dans sa position normale initiale.

Dans une variante non représentée, l'accoudoir est réalisé dans un matériau permettant une déformation élastique d'une partie de l'accoudoir dans un plan sensiblement horizontal. De même que pour le premier mode de réalisation, cette déformation s'apparente à un pivotement de l'accoudoir autour d'un axe sensiblement vertical. La partie déformable peut présenter une forme de lame, similaire à la forme de l'extrémité 53 déjà décrite, le reste de l'accoudoir étant rigide. Une flexion de la lame sous l'effet d'une pression permet alors de dégager l'accès à la ceinture de fixation. L'accoudoir retrouve sa forme initiale, et donc la position normale d'utilisation, dès que la pression cesse. L'extrémité 53 doit alors présenter une rigidité suffisante suivant la direction verticale pour une bonne tenue de l'accoudoir.

On peut également prévoir un support élastique de l'accoudoir qui supporterait le bras d'appui, et serait, relié au dossier du siège.

Ces variantes peuvent, être adaptées à un accoudoir fixé sur la console centrale. Cette dernière doit alors présenter, par exemple du côté de son extrémité proche des dossiers, des parois latérales plus hautes sur lesquelles sont articulés les accoudoirs.

Une telle conception permet également à l'accoudoir d'être mobile latéralement dans le cas d'un choc latéral, ce qui évite au passager d'être en contact, avec un obstacle fixe. L'articulation peut alors intégrer des moyens d'absorption de l'énergie cinétique au-delà du mouvement normal du déplacement de l'accoudoir.

## Revendications

1. Accoudoir (3, 5) pour siège de véhicule automobile, **caractérisé en ce qu'**il est apte à pivoter, par rapport au support (1, 2) sur lequel il est monté, autour d'un axe sensiblement vertical (55), ou d'un axe sensiblement horizontal (34) s'étendant parallèlement à la direction longitudinale du siège, entre une position normale d'utilisation, à proximité du siège, et au moins une position écartée, à distance du siège.

2. Accoudoir selon la revendication 1, **caractérisé en ce qu'**il est apte à pivoter de manière élastique, une force de rappel s'exerçant sur l'accoudoir pour le ramener d'une position écartée à la position normale.

3. Accoudoir selon la revendication 2, **caractérisé en ce que** l'axe de pivotement est formé par une articulation au moyen de laquelle l'accoudoir est relié à son support, et **en ce que** l'articulation est élastique, ou pourvue d'un moyen élastique de rappel.

4. Accoudoir selon la revendication 2, **caractérisé en ce que** l'axe de pivotement est formé d'une partie de l'accoudoir dont la forme et/ou le matériau sont choisis pour que cette partie présente un comportement plus élastique que le reste de l'accoudoir.

5. Accoudoir selon l'une des revendications 1 à 4 lorsque l'axe de pivotement est sensiblement vertical (55), **caractérisé en ce qu'**il est formé d'un bras d'appui allongé (5) dont une extrémité (54) est libre et l'autre extrémité (53) est reliée au support, ledit bras s'étendant suivant une direction sensiblement parallèle à la direction longitudinale du siège dans la position normale.

6. Accoudoir selon l'une des revendications 1 à 4 lorsque l'axe de pivotement est sensiblement horizontal (34) et s'étend parallèlement à la direction longitudinale du siège, **caractérisé en ce qu'**il est formé d'un bras d'appui allongé (31) supporté par au moins un pied (32), l'extrémité libre du pied étant reliée au support, le bras s'étendant suivant une direction sensiblement parallèle à la direction longitudinale du siège.

7. Accoudoir selon l'une des revendications 1 à 6, **caractérisé en ce que** son support est un siège (1) ou une console (2) de véhicule automobile.

8. Accoudoir selon l'une des revendications précédentes, **caractérisé en ce qu'**il est pourvu de moyens d'absorption de l'énergie cinétique.

9. Console de véhicule automobile (2) destinée à être placée à proximité d'un siège (1) pourvu d'une fixation de ceinture de sécurité (4), **caractérisée en ce qu'**elle supporte au moins un accoudoir (3, 5) selon l'une des revendications 1 à 8 de sorte que, dans la position écartée, l'accoudoir libère l'accès à la fixation de ceinture de sécurité.

10. Siège de véhicule automobile (1), comportant une assise (11) pourvue d'une fixation de ceinture de sécurité (4) et un dossier (12), **caractérisé en ce que** l'un au moins des bords verticaux du dossier ou l'un au moins des bords longitudinaux de l'assise supporte un accoudoir (3, 5) selon l'une des revendications 1 à 8, de sorte que, dans la position écartée, l'accoudoir libère l'accès à la fixation de ceinture de sécurité.
